# EUROPÄISCHE PATENTSCHRIFT

(11) **EP 0 821 866 B1**
(45) Veröffentlichungstag und Bekanntmachung des Hinweises auf die Patenterteilung: **28.02.2001**
(21) Anmeldenummer: 97111011.9
(22) Anmeldetag: 02.07.1997
(51) Int. Cl.: A01B 23/02

(54) **Rüttlelegge**
Oscillating harrow
Herse oscillante

(30) Priorität: 02.08.1996 DE 19631255
(43) Veröffentlichungstag der Anmeldung: 04.02.1998
(73) Patentinhaber: Amazonen-Werke H. Dreyer GmbH & Co. KG, 49205 Hasbergen (DE)
(72) Erfinder: Dreyer, Heinz, Dipl.-Ing. Dr., 49205 Hasbergen (DE); Higgen, Reinhard, Dipl.-Ing., 27798 Hude (DE)

(56) Entgegenhaltungen:
- DE-A- 2 704 923
- DE-A- 3 932 512
- DE-A- 4 018 728
- DE-B- 1 175 026
- DE-C- 311 701
- FR-A- 1 545 823
- FR-A- 1 564 217
- FR-A- 1 578 757
- GB-A- 472 176
- NL-C- 22 398
- US-A- 4 325 435

## Beschreibung

Die Erfindung betrifft eine Rüttelegge gemäß des Oberbegriffes des Patentanspruches 1.

Eine derartige Rüttelegge ist beispielsweise durch die EP 01 42 750 A2 bekannt. Die als U-förmige Längsträger ausgebildeten Eggenbalken sind derart angeordnet, daß an dem oberen Längssteg die Schwingen angeschraubt sind, während an dem unteren Längssteg, der dem oberen Längssteg gegenüber liegt, die Zinken befestigt sind. Mittels dieser U-förmigen Ausbildung der Längsträger ergibt sich eine federnde Anordnung der Zinken, gegenüber dem Rahmen der Maschine, so daß die Zinken aufgrund der Elastizität der freien Schenkel der Längsträger im Boden befindlichen Steine ausweichen können. Hierdurch werden die Kräfte auf die Zinken und auf die Eggenbalken erheblich reduziert.

Nachteilig ist bei dieser bekannten Anordnung, daß insbesondere auf steinigen Böden, insbesondere wenn die Zinken bereits stark abgenutzt sind und die Vorderseiten der Längsträger Bodenkontakt haben, die Längsträger auf ihrer Vorderseite nach einer entsprechenden Einsatzzeit durchschleifen können.

Der Erfindung liegt die Aufgabe zugrunde, einfach ausgebildete Längsträger zu schaffen, wobei gleichzeitig ein Verschleißschutz für die Zinkenbefestigung geschaffen wird.

Diese Aufgabe wird erfindungsgemäß durch die kennzeichnenden Merkmale des Patentanspuches 1 gelöst. Infolge dieser Maßnahmen wird durch die offene Formgebung in Verbindung mit der darauf abgestimmten Materialstärke und Materialfestigkeit und der zentralen Anordnung der Zinken eine optimale Steifigkeit bei einer ausreichenden Elastizität für die Zinken bei der Arbeit im Boden erreicht. Hierbei können die Zinken in der senkrechten Zinkenbalkenmitte angeordnet sein, so daß damit unkontrollierte Schwingungen vermieden und ein vorzeitiger Dauerbruch verhindert wird. Der vordere Schenkel des Zinkenbalkens ist u.a. auch als Verschleißschutz für alle Befestigungsschrauben ausgebildet und durch seine Formgebung nach unten gerichtet, so daß er als Verschleißschiene eine lange Lebensdauer des Zinkenbalkens und der Zinkenbefestigung gewährleistet.

Durch die offene Formgebung läßt sich also eine gewisse Elastizität in- und entgegen der Drehrichtung erreichen, was sich vorteilhaft auf die Zinkenanordnung auswirkt. Die Zinken können also beim Auftreffen auf Steine aufgrund der ausreichenden Elastizität des Zinkenbalkens ausweichen. Da der vordere Schenkel des Zinkenbalkens als Verschleißschutz wirkt, ist eine lange Lebensdauer der Zinkenbalken gewährleistet. Desweiteren werden durch den vorderen Schenkel die Schraubenköpfe, mit den die Zinken befestigt sind, geschützt.

Eine vorteilhafte Ausbildung des Eggenbalkens wird dadurch erreicht, daß der vordere Schenkel leicht nach schräg vorn unten und der hintere Schenkel leicht nach schräg hinten unten gerichtet ist.

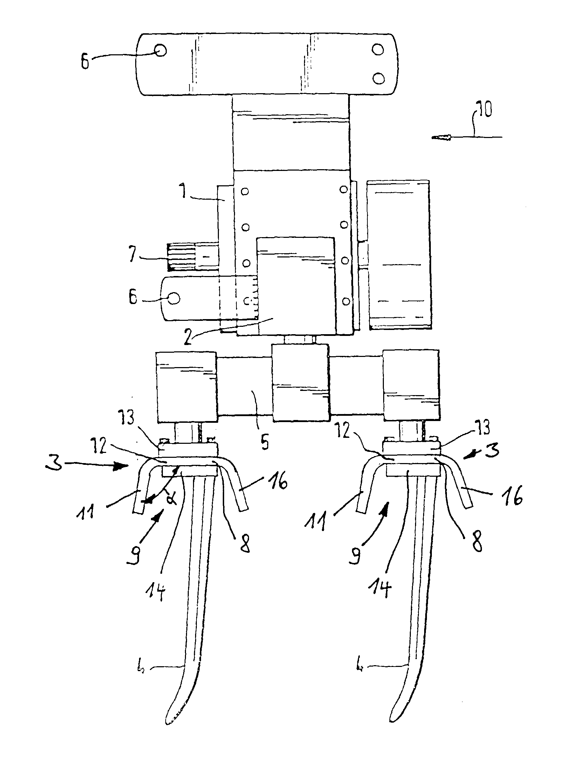

Weitere Einzelheiten der Erfindung sind den übrigen Ansprüchen, der Beispielsbeschreibung und der Zeichnung zu entnehmen. Die Zeichnung zeigt
eine erfindungsgemäße Rüttelegge in der Seitenansicht.

Die Rüttelegge besteht im wesentlichen aus der Getriebeeinheit 1, dem an der Getriebeeinheit 1 festgeschraubten Tragrahmen 2, und den beiden hintereinander angeordneten Eggenbalken 3, die mit den Bodenbearbeitungszinken 4 besetzt sind. Die Eggenbalken 3 sind mit Hilfe der Schwingen 5 an dem Tragrahmen 2 angeordnet. Die Rüttelegge wird mit Hilfe der Dreipunktkupplungselemente 6 mit dem Dreipunktkraftheber einer landwirtschaftlichen Zug- oder Arbeitsmaschine gekuppelt. Hinter der Rüttelegge läßt sich in bekannter und daher nicht dargestellter Weise eine nachlaufende Walze sowie eine Drillmaschine anordnen.

Der Antrieb der Eggenbalken 3 erfolgt über die an die Eingangswelle 7 der Getriebeeinheit 1 angeschlossene Gelenkwelle von der Zapfwelle einer landwirtschaftlichen Zug- oder Arbeitsmaschine. Die Drehbewegung der Eingangswelle 7 wird durch den in der Getriebeeinheit 1 angeordneten Taumelkörpertrieb in eine drehschwingende Bewegung umgewandelt und auf die mittlere der Schwingen 5 übertragen. Diese drehschwingende Bewegung versetzt die Eggenbalken in eine quer zur Fahrtrichtung der Maschine hin- und hergehende Bewegung. Durch diese hin- und hergehende Bewegung der Eggenbalken 3 wird der Boden durch die Zinken 4 bearbeitet.

Die Eggenbalken 3 sind als U-förmige Längsträger 8 ausgebildet, wobei sich die offene Seite 9 der Längsträger 8 sich jeweils auf der Unterseite befindet. Die Rüttelegge wird in Fahrtrichtung 10 vorwärts bewegt. Der vordere aufrechte Schenkel 11 des jeweiligen Eggenbalken 3 dient als Verschleißschutz. An dem mittleren Schenkel 12 der Längsträger 8 sind die Halterungen 13 der Schwingen 5 angeordnet. An diesem oberen Schenkel 12 sind ebenfalls die Zinken 4 mit ihren Befestigungselementen 14 durch die Schrauben 15 angebracht. Der vordere Schenkel 12 ist leicht nach schräg vorn unten, während der hintere Schenkel 16 leicht nach schräg unten gerichtet ist. Die Befestigungselemente 14 der Bearbeitungszinken 4 und die Halterungen 13 der Schwingen 5 sind an dem Eggenbalken 3 zumindest annähernd in der Mitte des Mittelschenkels 12 des Längsträgers 8 befestigt. Die Winkel a zwischen dem Mittelschenkel 12 und den nach unten gerichteten Schenkeln 12 und 16 betragen 95 bis 115 Grad, vorzugsweise etwa 105 Grad.

## Patentansprüche

1. Rüttelegge mit einem Tragrahmen und zumindest zwei hintereinander angeordneten, sich quer zur Fahrtrichtung erstreckenden und mit Bodenbearbeitungszinken besetzten und als U-förmige Längsträger ausgebildeten Eggenbalken, die über Schwingen an dem Tragrahmen angeordnet und im Betrieb über eine Antriebswelle in quer zur Fahrtrichtung hin- und hergehende Bewegungen versetzt werden, dadurch gekennzeichnet, daß die offene Seite (9) des U-förmigen Längsträgers (8) nach unten weist, daß die Zinken (4) und die Schwingen (5) nur an dem horizontal verlaufenden Mittelschenkel (12) des U-förmigen Längsträgers (8) befestigt sind.

2. Rüttelegge nach Anspruch 1, dadurch gekennzeichnet, daß die Bearbeitungszinken (4) an dem Eggenbalken (3) zumindest annähernd in der Mitte des Mittelschenkels (12) des Längsträgers (8) befestigt sind.

3. Rüttelegge nach Anspruch 1, dadurch gekennzeichnet, daß die Befestigungselemente (14) der Bearbeitungszinken (4) und die Befestigungselemente (13) der Schwingen (5) an dem Eggenbalken (3) zumindest annähernd in der Mitte des Mittelschenkels (12) des Längsträgers (8) befestigt sind.

4. Rüttelegge nach einem oder mehreren der vorstehenden Ansprüche, dadurch gekennzeichnet, daß der vordere aufrechte Schenkel (11) des Eggenbalkens (3) als Verschleißschutz für die Zinkenbefestigungselemente (14) und für die Schwingenbefestigungselemente (13) ausgebildet ist.

5. Rüttelegge nach einem oder mehreren der vorstehenden Ansprüche, dadurch gekennzeichnet, daß der vordere Schenkel (11) leicht nach schräg vorn-unten und der hintere Schenkel (16) leicht nach schräg hinten-unten gerichtet sind.

6. Rüttelegge nach Anspruch 5, dadurch gekennzeichnet, daß die Winkel (α) jeweils zwischen dem Mittelschenkel (12) und den nach unten gerichteten Schenkeln 95° bis 115°, vorzugsweise etwa 105° betragen.

## Claims

1. Reciprocating harrow, including a supporting frame and at least two harrow bars, which are disposed one behind the other and extend transversely relative to the direction of travel, said bars being fitted with ground cultivating tines and being configured as U-shaped longitudinal supports, which bars are disposed on the supporting frame via rocker arms and are set into reciprocating movements transversely relative to the direction of travel during operation via a drive shaft, characterised in that the open side (9) of the U-shaped longitudinal support (8) points downwardly, and in that the tines (4) and the rocker arms (5) are secured only on the horizontally extending central portion (12) of the U-shaped longitudinal support (8).

2. Reciprocating harrow according to claim 1, characterised in that the cultivating tines (4) are secured on the harrow bar (3) at least approximately in the centre of the central portion (12) of the longitudinal support (8).

3. Reciprocating harrow according to claim 1, characterised in that the securing elements (14) of the cultivating tines (4) and the securing elements (13) of the rocker arms (5) are mounted on the harrow bar (3) at least approximately in the centre of the central portion (12) of the longitudinal support (8).

4. Reciprocating harrow according to one or more of the preceding claims, characterised in that the front upright portion (11) of the harrow bar (3) is configured as a means for protection against wear of the tine securing elements (14) and for the rocker arm securing elements (13).

5. Reciprocating harrow according to one or more of the preceding claims, characterised in that the front portion (11) is orientated to slope in a slightly forward and downward manner, and the rear portion (16) is orientated to slope in a slightly rearward and downward manner.

6. Reciprocating harrow according to claim 5, characterised in that the angles (α) respectively between the central portion (12) and the dowmwardly orientated portions are between 95° and 115°, preferably about 105°.

## Revendications

1. Herse oscillante comprenant un châssis et au moins deux poutres de herse placées l'une derrière l'autre transversalement à la direction de déplacement et garnies de dents pour le travail du sol, ces poutres en forme de U étant mises en oscillation par l'intermédiaire d'un arbre d'entraînement monté sur le châssis et commandant un mouvement alternatif transversalement à la direction de déplacement,
caractérisée en ce que
le côté ouvert (9) de la poutre longitudinale (8), à section en U, est tourné vers l'avant, et
les dents (4) et les bielles (5) sont fixées sur la branche médiane horizontale (12) de la poutre longitudinale (8) en forme de U.

2. Herse oscillante selon la revendication 1,
caractérisée en ce que
les dents (4) sont fixées à la poutre de herse (3) au moins au voisinage du milieu de la branche médiane (12) de la poutre longitudinale (8).

3. Herse oscillante selon la revendication 1,
caractérisée en ce que
les éléments de fixation (14) des dents (4) et ceux (13) des biellettes (5) sont reliés à la poutre de herse (3) au moins au voisinage du milieu de la branche médiane (12) de la poutre longitudinale (8).

4. Herse oscillante selon l'une ou plusieurs des revendications précédentes,
caractérisée en ce que
la branche verticale avant (11) de la poutre de herse (3) constitue un moyen de protection anti-usure pour les éléments de fixation de dents (14) et pour les éléments de fixation de biellettes (13).

5. Herse oscillante selon une ou plusieurs des revendications précédentes,
caractérisée en ce que
la branche avant (11) est légèrement inclinée vers l'avant et vers le bas, et la branche arrière (16) est légèrement inclinée vers l'arrière et vers le bas.

6. Herse oscillante selon la revendication 5,
caractérisée en ce que
l'angle (α), prévu chaque fois entre la branche médiane (12) et les branches dirigées vers le bas, est de l'ordre de 95° à 115°, et de préférence égal à environ 105°.
